# EUROPEAN PATENT SPECIFICATION

(11) **EP 3 547 874 B1**
(45) Date of publication and mention of the grant of the patent: **09.04.2025**
(21) Application number: 17816590.8
(22) Date of filing: 30.11.2017
(51) Int. Cl.: A46B 15/00, A61C 17/22, A46B 11/00

(54) **METHOD FOR DETERMINING THE ORIENTATION OF A USER'S HEAD DURING TEETH CLEANING**
VERFAHREN ZUR FESTSTELLUNG DER GEBRAUCHERSKOPFNEIGUNG BEIM ZÄHNEPUTZEN
PROCEDE POUR DETERMINER L'ORIENTATION DE LA TETE D' UN UTILISATEUR PENDANT LE NETTOYAGE DES DENTS

(30) Priority: 01.12.2016 US 201662428701 P
(43) Date of publication of application: 09.10.2019
(73) Proprietor: Koninklijke Philips N.V., 5656 AG Eindhoven (NL)
(72) Inventor: DEN HAMER, Arjen, 5656 AE Eindhoven (NL); HARDEMAN, Toon, 5656 AE Eindhoven (NL); MAIA MASCULO, Felipe, 5656 AE Eindhoven (NL)
(74) Representative: Philips Intellectual Property & Standards
(86) International application number: PCT/EP2017/081086
(87) International publication number: WO 2018/100121

(56) References cited:
- EP-A2- 2 896 319
- US-A1- 2008 109 973
- US-A1- 2012 310 593
- US-A1- 2015 044 629

## Description

### Field of the Invention

The present disclosure relates generally to systems and methods for determining the orientation of a user's head during use of an oral care device.

### Background

US 2012/310593 A1 discloses a method of monitoring tooth brushing comprising: receiving a position signal from a position sensor disposed on a toothbrush comprising a handle and a head; receiving a force signal from a force sensor disposed on the toothbrush; and calculating a position of the head of the toothbrush using the position signal in combination with the force signal.

Tracking the location of an oral care device within the oral cavity enables effective feedback to a user with respect to the user's oral hygiene practices. For example, if the location of an oral cleaning head is tracked within the user's mouth, portions of a group of teeth, a specific tooth, or gum section not yet cleaned may be identified so that the user can focus on those areas. Further, appropriate feedback regarding a user's technique, e.g., cleaning too hard, too soft, or not long enough on a particular section of the mouth, can be provided based on tracking the location of the oral care device within the oral cavity during use.

Various conventional forms of tracking the location of an oral care device within a user's mouth are known. For example, inertial motion sensors such as accelerometers, gyroscopes, and magnetic sensors are utilized to measure the motion of an oral care device with respect to gravity or the direction of force, but are not capable of detecting the relative orientation of the oral care device with respect to the user's head. In order to determine the location of the device in the user's mouth, either the relative pose of the device with respect to the user's head is measured, or information about the orientation of the user's head and the orientation of the device is measured separately and combined afterwards.

These conventional forms of tracking, therefore, are unable to track the location and movement of a user or a device relative to the user's head. These limitations of the conventional technology can lead to inaccurate tracking and poor feedback.

Accordingly, there is a need in the art for systems and methods for improved tracking of an oral care device during use, including determining the orientation of the user's head using sensor data.

### Summary of the Invention

The invention is defined by the independent claims. The dependent claims define advantageous embodiments.

The present disclosure is directed to inventive systems and methods for determining the orientation of a user's head during use of an oral care device. Various embodiments and implementations herein are directed to an oral care device including a motion sensor that can be configured to deduce the location of a user's head during use of the oral care device. The sensor can be wired or wirelessly connected to a controller comprising a processor and a non-transitory storage medium for storing program code, which can be programmed to detect when the device is located within a designated calibration area within the oral cavity, estimate the orientation of the user's head based on the motion of the device within the designated calibration area, and determine the orientation of the device relative to the user's mouth. The inventive systems and methods enable tracking of the device using one or more sensors without a mandatory head orientation at the start of a cleaning session, and/or without directly measuring the orientation of the head at the start of the cleaning session.

As used herein for purposes of the present disclosure, the term "controller" is used generally to describe various apparatus relating to the operation of a stream probe apparatus, system, or method. A controller can be implemented in numerous ways (e.g., such as with dedicated hardware) to perform various functions discussed herein. A "processor" is one example of a controller which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media (generically referred to herein as "memory," e.g., volatile and non-volatile computer memory). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present disclosure discussed herein. The terms "program" or "computer program" are used herein in a generic sense to refer to any type of computer code (e.g., software or microcode) that can be employed to program one or more processors or controllers.

The term "user interface" as used herein refers to an interface between a human user or operator and one or more devices that enables communication between the user and the device(s). Examples of user interfaces that may be employed in various implementations of the present disclosure include, but are not limited to, switches, potentiometers, buttons, dials, sliders, track balls, display screens, various types of graphical user interfaces (GUIs), touch screens, microphones and other types of sensors that may receive some form of human-generated stimulus and generate a signal in response thereto.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is a schematic representation of an oral care device, in accordance with an embodiment.
FIG. 2 is a schematic representation of a control system of an oral care device, in accordance with an embodiment.
FIG. 3 is a flowchart of a method for tracking the location of an oral care device, in accordance with an embodiment.
FIG. 4 is a schematic representation of a user's oral cavity, in accordance with an embodiment.
FIG. 5 is a schematic representation of a user's oral cavity, in accordance with an embodiment.

### Detailed Description of Embodiments

The present disclosure describes various embodiments of an oral care device comprising one or more sensors, such as an accelerometer, gyroscope, or magnetic sensor. More generally, Applicant has recognized and appreciated that it would be beneficial to provide a device that determines the orientation of the user's head during an oral cleaning session, and utilizes that information to track the oral care device during a cleaning session. Accordingly, the methods and systems described or otherwise envisioned herein provide an oral care device that tracks the location of a device using one or more sensors without a mandatory head orientation at the start of an oral cleaning session, and/or without directly measuring the orientation of the head at the start of the cleaning session. According to an embodiment, the oral care device comprises one or more sensors that determine the orientation of the user's head based on the restricted movement of the device within a designated calibration area of the oral cavity. The system combines the orientation of the user's head with motion sensor data from the oral care device in order to determine the relative orientation of the device with respect to the user's mouth, thereby provide a tracking mechanism. The tracking mechanism can be utilized to provide feedback to the user about the oral cleaning session.

The embodiments and implementations disclosed or otherwise envisioned herein can be utilized with any oral care device. Examples of suitable personal care devices include a toothbrush, a flossing device, an oral irrigator, a tongue cleaner, or other oral care device. However, the disclosure is not limited to these enumerated devices, and thus the disclosure and embodiments disclosed herein can encompass any oral care device.

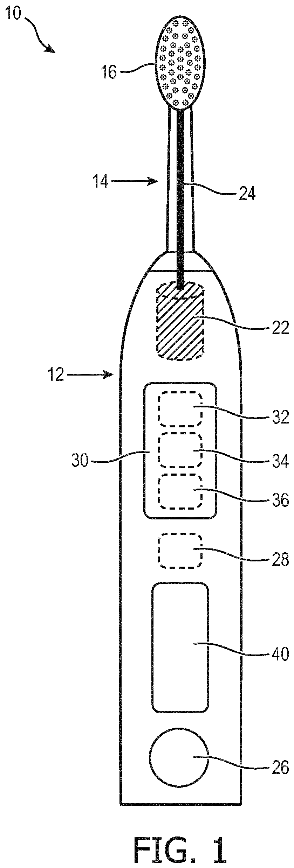

Referring to FIG. 1, in one embodiment, an oral care device 10 is provided that includes a handle or body portion 12 and a device head member 14. Device head member 14 includes at its end remote from the body portion a device head 16. The body portion 12 typically comprises a housing, at least a portion of which is hollow, to contain components of the personal care device. According to an embodiment, device head member 14 is mounted so as to be able to move relative to the body portion 12. The movement can be any of a variety of different movements, including vibrations or rotation, among others. Although in the present embodiment the oral care device 10 is depicted as an oscillating toothbrush, it will be understood that alternative embodiments of the oral care device are also envisioned.

The body portion 12 can comprise a drivetrain assembly with a motor 22 for generating movement, and a transmission component or drivetrain shaft 24, for transmitting the generated movements to device head member 14. The drivetrain assembly can include components such as a power supply, an oscillator, and one or more electromagnets, among other components. In this embodiment the power supply comprises one or more rechargeable batteries, not shown, which can, for example, be electrically charged in a charging holder in which oral care device 10 is placed when not in use. According to one embodiment, device head member 14 is mounted to the drive train shaft 24 so as to be able to vibrate relative to body portion 12. The device head member 14 can be fixedly mounted onto drive train shaft 24, or it may alternatively be detachably mounted so that device head member 14 can be replaced with a different device head member for different operating features, or when the bristles or another component of the device head are worn out and require replacement. Body portion 12 is further provided with a user input 26 to activate and de-activate the drivetrain. The user input 26 allows a user to operate the oral care device 10, for example to turn the device on and off. The user input 26 may, for example, be a button, touch screen, or switch.

Oral care device 10 includes one or more sensors 28. Sensor 28 is shown in FIG. 1 within body portion 12, but may be located anywhere within the device, including for example within device head member 14 or device head 16. Sensor 28 comprises an inertial motion sensor such as an accelerometer, gyroscope, or magnetic sensor. According to an embodiment, sensor 28 is configured to provide readings of six axes of relative motion (three axes translation and three axes rotation), using for example a 3-axis gyroscope and a 3-axis accelerometer. As another example, sensor 28 is configured to provide the readings of nine axes of relative motion using, for example, 3-axis gyroscope, a 3-axis accelerometer, and a 3-axis magnetometer. Other sensors may be utilized either alone or in conjunction with these sensors, including but not limited to a pressure sensor and other types of sensors, such as a capacitive sensor, a camera, a photocell, a clock, a timer, and other types of sensors. Many different types of sensors could be utilized, as described or otherwise envisioned herein. According to an embodiment, sensor 28 is configured to generate information indicative of the acceleration and angular orientation of oral care device 10. The sensor may comprise two or more sensors 28 that function together as the 6-axis or a 9-axis spatial sensor system.

Sensor data generated by sensor 28 is provided to a controller 30. According to an embodiment, sensor 28 is integral to controller 30. Controller 30 may be formed of one or multiple modules, and is configured to operate the personal care device 10 in response to an input, such as input obtained via user input 26. Controller 30 can comprise, for example, a processor 32 and a memory 34. Processor 32 may take any suitable form, including but not limited to a microcontroller, multiple microcontrollers, circuitry, a single processor, or plural processors. Memory 34 can take any suitable form, including a non-volatile memory and/or RAM. The non-volatile memory may include read only memory (ROM), a hard disk drive (HDD), or a solid state drive (SSD). The memory can store, among other things, an operating system. The RAM is used by the processor for the temporary storage of data. According to an embodiment, an operating system may contain code which, when executed by controller 30, controls operation of the hardware components of oral care device 10. According to an embodiment, connectivity module 36 transmits collected sensor data, and can be any module, device, or means capable of transmitting a wired or wireless signal, including but not limited to a Wi-Fi, Bluetooth, near field communication, and/or cellular module.

According to an embodiment, oral care device 10 can comprise a user interface 40 configured to provide information to a user before, during, and/or after a cleaning session. The user interface 40 can take many different forms, but is configured to provide information to a user. For example, the information can be read, viewed, heard, felt, and/or otherwise interpreted concerning the cleaning session. According to an embodiment, the user interface 40 provides feedback to the user, such as a guided cleaning session, that includes information about where and how to clean. Accordingly, the user interface may be a display that provides information to the user, a haptic mechanism that provides haptic feedback to the user, a speaker to provide sounds or words to the user, or any of a variety of other user interface mechanisms. User interface 40 may be located on oral care device 10, or can be a remote device such as a smart phone, tablet, smart watch, laptop, or other computerized device. According to an embodiment, controller 30 of oral care device 10 receives information from sensor 28, assesses and analyzes that information, and provides information that can be displayed to the user via the user interface 40.

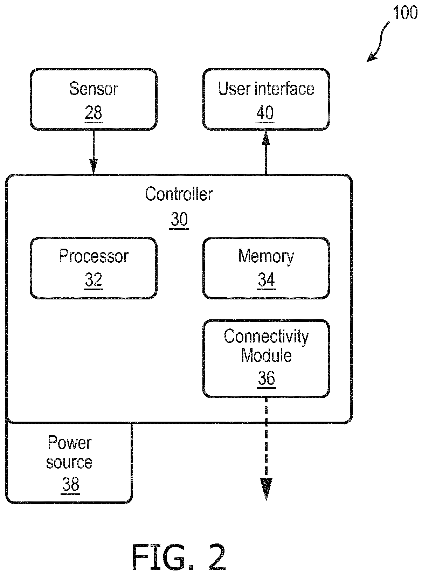

Referring to FIG. 2, in one embodiment, a schematic representation of the control system 100 of oral care device 10 is provided. The control system 100 of oral care device 10 comprise a controller 30 with a processor 32, a memory 34, which can store an operating system as well as sensor data, and a connectivity module 36. The device also comprises a power source 38 which can be AC power, or can be battery power from a rechargeable battery. The control system 100 further comprises a user interface 40, which is configured to transmit or receive information to the user. The sensor 28 of the system, which includes an inertial motion sensor such as an accelerometer, gyroscope, or magnetic sensor, generates sensor data in response to motion and communicates that data to controller 30.

Connectivity module 36 of the device can be configured and/or programmed to transmit sensor data to a wireless transceiver (not shown). For example, connectivity module 36 may transmit sensor data via a Wi-Fi connection over the Internet or an Intranet to a dental professional, a database, or other location. Alternatively, connectivity module 36 may transmit sensor or feedback data via a Bluetooth or other wireless connection to a local device (e.g., a separate computing device), database, or other transceiver. For example, connectivity module 36 allows the user to transmit sensor data to a separate database to be saved for long-term storage, to transmit sensor data for further analysis, to transmit user feedback to a separate user interface, or to share data with a dental professional, among other uses. Connectivity module 36 may also be a transceiver that can receive user input information, including the above referenced standards (as should be appreciated by a person of ordinary skill in the art in conjunction with a review of this disclosure). Other communication and control signals described herein can be effectuated by a hard wire (non-wireless) connection, or by a combination of wireless and non-wireless connections.

According to an embodiment, control system 100 of oral care device 10 can programmed and/or configured to determine the orientation of a user's head during use of the oral care device. As discussed herein, the information or data analyzed or used by control system 100 of oral care device 10 to carry out the functions and methods described herein can be generated by the one or more sensors 28. For example, controller 30 can be programmed and/or configured to effectuate: (i) detection of the oral care device within one or more calibration areas within the oral cavity; (ii) estimation of the orientation of the user's head based on the restricted movement of the device within the calibration area; and (iii) determine the relative orientation of the device with respect to the user's mouth by combining the determined orientation of the user's head and motion sensor data from the oral care device.

Sensor 28 can be any of the sensors described or otherwise envisioned herein, and can be programmed and/or configured to obtain sensor data regarding one or more aspects of the user's movement (e.g., head movement) during a cleaning session. Controller 30 can receive the sensor data from sensor 28 in real-time or periodically. For example, sensor 28 may send a constant stream of sensor data to controller 30 for storage and/or analysis, or may temporarily store and aggregate or process data prior to sending it to controller 30. Once received by controller 30, the sensor data can be processed by processor 32. According to an embodiment, the processing can generally comprise of one or more of the following steps: (i) normalizing or otherwise processing the sensor data for further analysis; (ii) retrieving stored sensor data from memory 34 for analysis; (iii) analyzing the data to determine whether the oral care device is within one or more calibration areas within the oral cavity; (iv) analyzing the data to estimate the orientation of the user's head based on the restricted movement of the device within the calibration area; (v) analyzing the data to determine the relative orientation of the device with respect to the user's mouth; (vi) tracking the oral care device during a cleaning session or, after a cleaning session, determining its location using stored data; and (vii) outputting data to the user in the indication on the user interface 40 regarding feedback for the cleaning session.

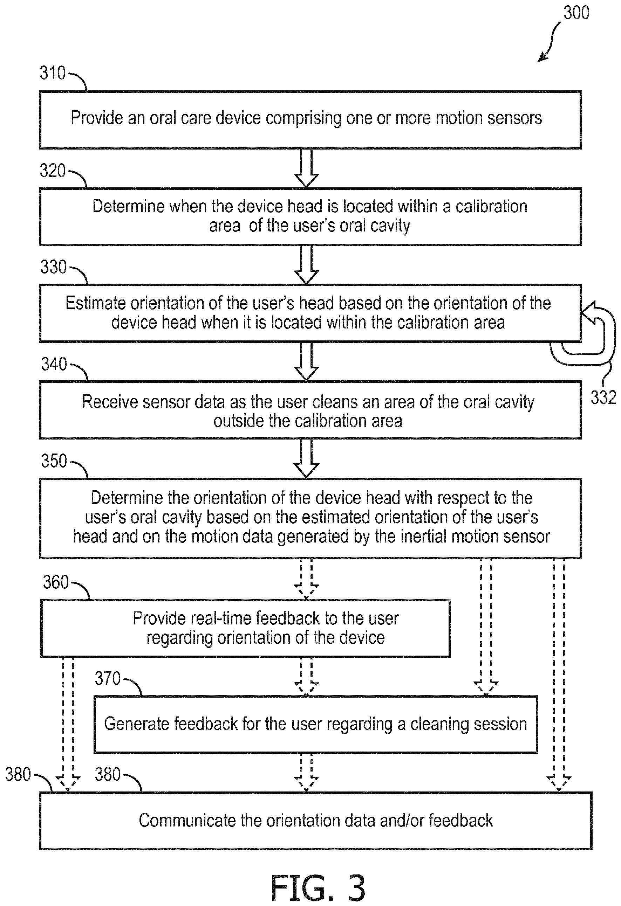

Referring to FIG. 3, in one embodiment, is a flowchart of a method 300 for determining the orientation of a user's head during use of an oral care device. In step 310 of the method, an oral care device 10 is provided. Oral care device 10 can be any of the devices described or otherwise envisioned herein. The oral care device also includes one or more sensors 28. Sensor 28 can be any of the sensors described or otherwise envisioned herein. Sensor 28 comprises an inertial motion sensor such as an accelerometer, gyroscope, or magnetic sensor. According to an embodiment, sensor 28 is configured to generate information indicative of the acceleration and angular orientation of oral care device 10.

At step 320 of the method, the system determines when device head 16 is located within a calibration area 110 of the user's oral cavity 200. A calibration area is an area within the user's oral cavity in which there is a physical constraint between the oral care device and the user's head. For example, calibration areas may be in the far back molar area, where the oral care device is only capable of adopting a limited number of orientations due to the limited amount of space in that region. Accordingly, a calibration area 110 is an area in which the oral care device is generally held in a known orientation relative to the head, and thus as described herein, the orientation of the head can be inferred if the orientation of the device head in the calibration area is known.

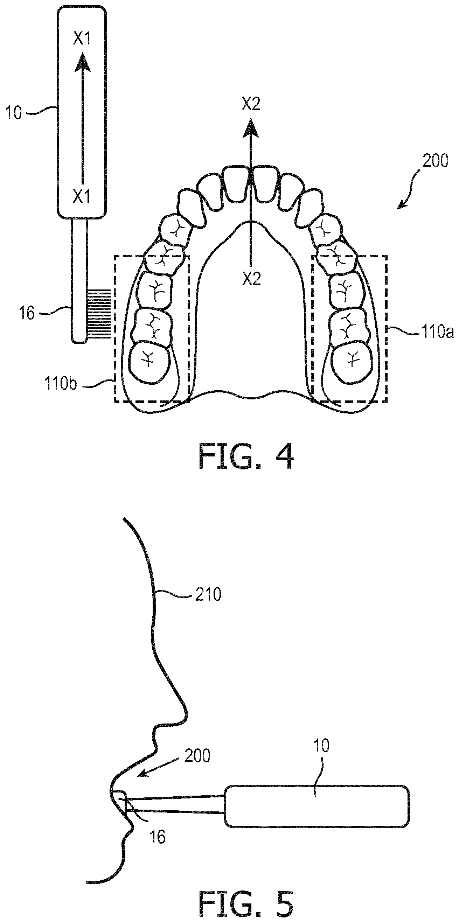

Referring to FIG. 4, for example, is a schematic representation of a user's oral cavity 200. The oral cavity comprises several calibration areas 110, including area 110a and 110b which are located near the user's lower rear molars. As described herein, when the system determines that the device head 16 is located at a calibration area, such as at calibration area 110b in FIG. 4, the orientation of the device 10 is determined. Here, the device 10 is aligned along axis X1-X1. The system, therefore, can deduce the orientation of the user's head, which here is along the related axis X2-X2.

Referring to FIG. 5, for example, is a schematic representation of a side view of a user's head 210 and oral cavity 200. The device head 16 is positioned within a calibration area in the user's mouth, such as the lower right rear molar region. Oral care device 10 can only adopt a certain orientation when the device head 16 is properly positioned within the calibration area, as shown in FIG. 5. Similarly, the user's head will likely adopt a certain orientation when the device head 16 is properly positioned within the calibration area.

There are several different systems and methods that can be utilized to determine that device head 16 is located within a calibration area 110 of the user's oral cavity 200. For example, the user can be instructed to begin the cleaning session at a certain area of the mouth to ensure that the device head is properly located at a calibration area 110. During this phase of instruction, the relationship between the axis of the oral care device and the orientation of the user's head is exploited by the system.

According to another embodiment, oral care device 10 can comprise a second sensor (not shown) utilized to determine whether the device is located within a calibration area 110 of the user's oral cavity 200. For example, the distance between the device handle 12 and the face of the user can be measured via proximity sensing to determine that the user is cleaning the molars and thus that the device is located within a calibration area 110. As another example, acoustic vibrations of the mouth could be used to determine whether the mouth is open or closed, thereby inferring knowledge about the region in which the device is located. Many other sensor configurations are possible.

According to another embodiment, a motion sensor could be utilized to determine where in the user's oral cavity 200 the oral care device 10 is located. For example, the sensor could generate sensor data in response to typical cleaning motions and can link this information to a template of specific locations within the mouth. According to an embodiment, a difference in motion between front teeth and molars can be used to determine which time samples are from the molars and which samples are collected at the front teeth.

According to another embodiment, the device or system may comprise predetermined or learned information about where within the user's oral cavity 200 the oral care device 10 is generally first activated. For example, the system may determine after several uses that the user always starts on the lower right outer quadrant.

According to an embodiment, the device or system may utilize two or more of these approaches simultaneously or sequentially to further refine the localization of the oral care device 10 within the user's oral cavity 200, and, more specifically, whether that locale is a calibration area 110. For example, prior knowledge about the likelihood of a typical starting position could be utilized together with an estimate obtained from sensor data to achieve higher confidence in the localization of the oral care device 10 within the user's oral cavity 200.

At step 330 of the method, the system or device estimates the orientation of the user's head based on the orientation of device head 16 when it is located within calibration area 110. The device exploits the very limited range of motion and number of possible orientations possible when the device head is located within a calibration area. When device head 16 is located within a calibration area 110, there is a necessary relationship between the orientation of the oral care device and the orientation of the user's head. The device comprises information about this relationship, such as a rule set stored in memory and/or a learned relationship, and can therefore determine the orientation of the user's head from the orientation of the device head, or can determine the orientation of the device head from the orientation of the user's head.

Accordingly, when the device head 16 is located within calibration area 110, orientation and/or motion data is obtained from the one or more sensors 28, and this is utilized to estimate the orientation of the user's head. This sensor data may be generated or obtained continuously or periodically. For example, the sensor data may only be obtained when the device head is located within the calibration area.

According to an embodiment, the orientation and/or motion data collected by the device when it is located within a calibration area 110 can be stored for future processing. Since the user may temporarily deviate from expected behavior, additional processing steps can be applied to improve the robustness of the estimate. For example, the stored data can be filtered for outliers before averaging and estimating the orientation of the user's head.

To further accommodate for deviations of actual user behavior compared to nominal or expected, a selection criterion can be added to determine whether new data is suited to be added to the stored data. This criterion can be made adaptive to the amount of data in storage, as well as the consistency of the data in storage. According to an embodiment, all data from the start of the cleaning session are stored and filtered for outliers. At a later time, new data is added to the store only if it is consistent with the expected values based on the previous data.

Due to the presence of sensor drift effects and slow head motions, the most recent samples may comprise the highest reliability. In a typical embodiment, the samples with the shortest history have the highest weightings in the final estimate.

To further increase accuracy, a compensation for known variations of the ideal behavior can be applied. According to an embodiment, predetermined or learned knowledge about the user's dexterity can be exploited to compensate for a bias in the estimate of the mouth coordinate system.

The system may periodically update the orientation of the user's head using the orientation of device head 16 when it is located within calibration area 110. According, at step 332 of the method, the system receives information from the one or more sensors 28 about the orientation of the device head, and uses that information to update or regenerate an estimate of the orientation of the user's head.

At step 340 of the method, the user cleans an area of the oral cavity outside the calibration area 110, and the one or more sensors 28 of the device generates sensor data regarding motion and/or orientation of the device. There are many methods and systems configured to generate or obtain this sensor data. Device 10 may comprise an inertial motion sensor 28 that generates sensor data regarding motion and/or orientation of the device. The sensor 28 sends the sensor data to controller 30, either automatically or in response to a query. The data can be generated and/or communicated continuously or periodically.

A step 350 of the method, the orientation of the device head with respect to the user's oral cavity is determined, based on the estimated orientation of the user's head from step 330 of the method, and on the motion data generated by the sensor at step 340 of the method. According to an embodiment, the system has estimated the orientation of the user's head in a previous step, and has received information about the motion of the device from the one or more sensors 28. Using the orientation of the user's head as a frame of reference, the device can deduce and therefore track the orientation and/or location of the oral care device as the user moves it throughout the mouth, adopting new orientations and locations.

According to an embodiment, the determined orientation of the device head with respect to the user's oral cavity can be further refined. For example, additional information can be added to complete or improve the orientation estimate of the user's head and deal with unmeasured degrees of freedom. According to an embodiment, for example, it can be assumed that the user's head is straight up. As another example, the relationship between the oral care device and the orientation of the user's head may be different depending on the calibration area. Accordingly, these varying relationships, which can either be preprogrammed or learned, can be utilized to further refine the determined orientation of the device head.

At optional step 360 of the method, the system or device provides feedback to the user regarding the determined orientation of the device head with respect to the user's oral cavity. This may be in substantially real-time, meaning as soon as the information is generated and available to the user. The feedback may comprise information about orientation of the device head, whether the orientation is proper or improper, cleaning time, coverage, cleaning efficacy, and/or other information. According to an embodiment, the feedback may comprise the amount of time spent cleaning specific segments in the user's mouth. In an even more advanced feedback mechanism, the user could receive feedback about individual teeth within a region. The system can communicate information to the user about which regions were adequately cleaned and which regions were not adequately cleaned. The feedback may be provided via user feedback 40, and can be a display, report, or even a single value, among other types of feedback.

The system can provide real-time feedback data to a user or to a remote system. For example, the system can transmit real-time feedback data to a computer via a wired or wireless network connection. As another example, the system can transmit stored feedback data to a computer via a wired or wireless network connection. In addition to these feedback mechanisms, many other mechanisms are possible. For example, the feedback can combine cleaning time and efficacy into a display, report, or even a single value, among other types of feedback.

At optional step 370 of the method, the system or device provides feedback to the user regarding an entire cleaning session. The system collects information about motion and orientation of the device 10 during the cleaning session, and collates that information into feedback. This feedback can be similar to the feedback provided in real-time in step 360.

At optional step 380 of the method, the generated feedback is communicated to a user, a device, and/or another individual. The feedback can be real-time feedback, or can be feedback regarding one or more cleaning sessions. According to an embodiment, the feedback is provided to the user via a smartphone, a computer program, a base station, a remote software service, or via other means. According to another embodiment, the feedback is provided directly to a healthcare professional such as a dentist or dental hygienist. For example, information about one or more cleaning sessions can be stored and transmitted to a healthcare professional automatically or upon request. According to an embodiment, the information can be stored on the user's smartphone and then brought to the dentist's office during a visit, where the information is automatically uploaded via a Bluetooth connection. The dentist can then review the feedback and utilize that information during care.

According to an embodiment, the generated orientation estimates and/or motion sensor data can be further processed or analyzed prior to being provided to the user or a professional as feedback. For example, data from a complete cleaning session can be aggregated to obtain an estimate of the orientation of the head at multiple time points. More advanced methods can be used that exploit the specific distribution of the motions compared to a reference. For example, external knowledge regarding whether samples were collected in the calibration area may not be required, this omitting the need for additional guidance or sensing. For example, the system can utilize knowledge about a typical spatial distribution of motions for a complete cleaning session. According to an embodiment, the mean direction of the main axis of the oral care device 10 over the complete session can be used to detect the direction that the user is facing. According to another embodiment, the orientation of the user's head can be estimated by matching the relative orientation between the user's head and the device to the typical distribution over a full or partial cleaning session. In one embodiment, this could be performed by minimizing the distance between the measured cleaning angle histograms and a template histogram of cleaning angles. The typical distribution of the device's orientation with respect to the user's head can be learned, for example, from lab tests and could be represented as a probability distribution.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "holding," and the like are to be understood to be open-ended, i.e., to mean including but not limited to.

## Claims

1. A non-therapeutic method (300) for determining an orientation of a user's head with an oral care device (10), the method comprising the steps of:
providing (310) an oral care device (10) comprising a device head (16), at least one sensor (28) including an inertial motion sensor, and a controller (30) coupled to receive sensor data from the at least one sensor (28);
determining (320) when the device head (16) is located within a calibration area (110) within the user's oral cavity (200), the calibration area (110) being an area within the user's oral cavity (200) in which there is a physical constraint between the oral care device (10) and the user's head; and
estimating (330), by the controller, based on an orientation of the device head (16) within the calibration area (110), an orientation of the user's head.

2. The method of claim 1, further comprising the step of receiving (340) data from the at least one sensor (28) regarding motion of the oral care device (10) in an area outside the calibration area (110).

3. The method of claim 2, further comprising the step of determining (350), based on the estimated orientation of the user's head and on the motion data generated by the at least one sensor (28), an orientation of the device head (16) with respect to the user's oral cavity (200) for an area outside the calibration area (110).

4. The method of claim 1, further comprising the step of providing (360) feedback to the user regarding the determined orientation and/or location of the device head (16) with respect to the user's oral cavity (200).

5. The method of claim 1, wherein the step of determining when the device head (16) is located within a calibration area (110) within the user's oral cavity (200) comprises data from a second sensor.

6. The method of claim 1, further comprising the step of generating (370), based on a plurality of estimates of the orientation of the device head (16) with respect to the user's oral cavity (200), feedback for a cleaning session.

7. The method of claim 6, further comprising the step of communicating (380) the generated feedback.

8. An oral care device (10) configured to determine an orientation of a user's head, the oral care device comprising:
a device head (16);
one or more sensors (28) including an inertial motion sensor; and
a controller (30) coupled to receive sensor data from the one or more sensors (28) and configured to estimate, based on an orientation of the device head within the calibration area, an orientation of the user's head by means of a method as claimed in any of the preceding claims.

## Patentansprüche

1. Nicht-therapeutisches Verfahren (300) zum Bestimmen einer Orientierung eines Kopfs eines Benutzers mit einer Mundpflegevorrichtung (10), wobei das Verfahren die folgenden Schritte umfasst:
Bereitstellen (310) einer Mundpflegevorrichtung (10), die einen Vorrichtungskopf (16), mindestens einen Sensor (28), der einen Trägheitsbewegungssensor einschließt, und eine Steuereinheit (30), die gekoppelt ist, um Sensordaten von dem mindestens einen Sensor (28) zu empfangen, umfasst;
Bestimmen (320), wann sich der Vorrichtungskopf (16) innerhalb eines Kalibrierungsbereichs (110) innerhalb einer Mundhöhle (200) des Benutzers befindet, wobei der Kalibrierungsbereich (110) ein Bereich innerhalb der Mundhöhle (200) des Benutzers ist, in dem eine physische Einschränkung zwischen der Mundpflegevorrichtung (10) und dem Kopf des Benutzers besteht; und
Schätzen (330) einer Orientierung des Kopfs des Benutzers durch die Steuereinheit basierend auf einer Orientierung des Vorrichtungskopfs (16) innerhalb des Kalibrierungsbereichs (110).

2. Verfahren nach Anspruch 1, weiter umfassend den Schritt eines Empfangens (340) von Daten von dem mindestens einen Sensor (28) bezüglich einer Bewegung der Mundpflegevorrichtung (10) in einem Bereich außerhalb des Kalibrierungsbereichs (110).

3. Verfahren nach Anspruch 2, weiter umfassend den Schritt eines Bestimmens (350) einer Orientierung des Vorrichtungskopfs (16) in Bezug auf die Mundhöhle (200) des Benutzers für einen Bereich außerhalb des Kalibrierungsbereichs (110) basierend auf der geschätzten Orientierung des Kopfs des Benutzers und auf den durch den mindestens einen Sensor (28) erzeugten Bewegungsdaten.

4. Verfahren nach Anspruch 1, weiter umfassend den Schritt eines Bereitstellens (360) einer Rückmeldung an den Benutzer bezüglich der bestimmten Orientierung und/oder dem Ort des Vorrichtungskopfs (16) in Bezug auf die Mundhöhle (200) des Benutzers.

5. Verfahren nach Anspruch 1, wobei der Schritt des Bestimmens, wann sich der Vorrichtungskopf (16) innerhalb eines Kalibrierungsbereichs (110) innerhalb der Mundhöhle (200) des Benutzers befindet, Daten von einem zweiten Sensor umfasst.

6. Verfahren nach Anspruch 1, weiter umfassend den Schritt eines Erzeugens (370) einer Rückmeldung für eine Reinigungssitzung basierend auf einer Vielzahl von Schätzungen der Orientierung des Vorrichtungskopfs (16) in Bezug auf die Mundhöhle (200) des Benutzers.

7. Verfahren nach Anspruch 6, weiter umfassend den Schritt eines Übermittelns (380) der erzeugten Rückmeldung.

8. Mundpflegevorrichtung (10), die dazu konfiguriert ist, eine Orientierung eines Kopfs eines Benutzers zu bestimmen, wobei die Mundpflegevorrichtung Folgendes umfasst:
einen Vorrichtungskopf (16);
einen oder mehrere Sensoren (28), die einen Trägheitsbewegungssensor einschließen; und
eine Steuereinheit (30), die gekoppelt ist, um Sensordaten von dem einen oder den mehreren Sensoren (28) zu empfangen, und dazu konfiguriert ist, eine Orientierung des Kopfs des Benutzers mittels eines Verfahrens nach einem der vorstehenden Ansprüche basierend auf einer Orientierung des Vorrichtungskopfs innerhalb des Kalibrierungsbereichs zu bestimmen.

## Revendications

1. Procédé non thérapeutique (300) permettant de déterminer l'orientation de la tête d'un utilisateur à l'aide d'un dispositif de soins bucco-dentaires (10), le procédé comprenant les étapes de :
fourniture (310) d'un dispositif de soins bucco-dentaires (10) comprenant une tête de dispositif (16), au moins un capteur (28) incluant un capteur de mouvement inertiel, et un dispositif de commande (30) couplé pour recevoir des données de capteur provenant du au moins un capteur (28) ;
détermination (320) du moment où la tête de dispositif (16) se situe dans une zone d'étalonnage (110) à l'intérieur de la cavité buccale (200) de l'utilisateur, la zone d'étalonnage (110) étant une zone à l'intérieur de la cavité buccale (200) de l'utilisateur dans laquelle il existe une contrainte physique entre le dispositif de soins bucco-dentaires (10) et la tête de l'utilisateur ; et
estimation (330), par le dispositif de commande, sur la base d'une orientation de la tête de dispositif (16) dans la zone d'étalonnage (110), d'une orientation de la tête de l'utilisateur.

2. Procédé selon la revendication 1, comprenant en outre l'étape de réception (340) de données provenant du au moins un capteur (28) concernant le mouvement du dispositif de soins bucco-dentaires (10) dans une zone en dehors de la zone d'étalonnage (110).

3. Procédé selon la revendication 2, comprenant en outre l'étape de détermination (350), sur la base de l'orientation estimée de la tête de l'utilisateur et des données de mouvement générées par le au moins un capteur (28), d'une orientation de la tête de dispositif (16) par rapport à la cavité buccale (200) de l'utilisateur pour une zone en dehors de la zone d'étalonnage (110).

4. Procédé selon la revendication 1, comprenant en outre l'étape de fourniture (360) d'un retour d'information à l'utilisateur concernant l'orientation déterminée et/ou l'emplacement de la tête de dispositif (16) par rapport à la cavité buccale (200) de l'utilisateur.

5. Procédé selon la revendication 1, dans lequel l'étape de détermination du moment où la tête de dispositif (16) est située dans une zone d'étalonnage (110) dans la cavité buccale (200) de l'utilisateur comprend des données provenant d'un second capteur.

6. Procédé selon la revendication 1, comprenant en outre l'étape de génération (370), sur la base d'une pluralité d'estimations de l'orientation de la tête de dispositif (16) par rapport à la cavité buccale (200) de l'utilisateur, d'un retour d'information pour une session de nettoyage.

7. Procédé selon la revendication 6, comprenant en outre l'étape de communication (380) du retour d'information généré.

8. Dispositif de soins bucco-dentaires (10) configuré pour déterminer une orientation de la tête d'un utilisateur, le dispositif de soins bucco-dentaires comprenant :
une tête de dispositif (16) ;
un ou plusieurs capteurs (28) incluant un capteur de mouvement inertiel ; et
un dispositif de commande (30) couplé pour recevoir des données de capteur provenant des un ou plusieurs capteurs (28) et configuré pour estimer, sur la base d'une orientation de la tête de dispositif dans la zone d'étalonnage, une orientation de la tête de l'utilisateur au moyen d'un procédé selon l'une quelconque des revendications précédentes.
